# DEMANDE DE BREVET EUROPEEN

(11) **EP 4 851 110 A1**
(43) Date de publication de la demande: **09.12.2026**
(21) Numéro de dépôt: 26182379.3
(22) Date de dépôt: 01.06.2026
(51) Int. Cl.: C01B 32/15, C01B 32/05

(54) **PREPARATION DE PARTICULES DE CARBONE SPHERIQUES DENSES ET LEURS UTILISATIONS**

(30) Priorité: 02.06.2025 FR 2505913
(71) Demandeur: Commissariat à l'Energie Atomique et aux Energies Alternatives, 75015 Paris (FR)
(72) Inventeur: ANDRIOTOU, Despoina, 38054 Grenoble cedex 09 (FR); PERALTA, David, 38054 Grenoble cedex 09 (FR)
(74) Mandataire: Gevers & Orès

(57) **Abrégé**

La présente invention concerne la préparation de particules de carbone sphériques, denses, à partir d'un matériau éventuellement recyclé à structure imidazolate zéolithique comprenant du zinc et/ou du cobalt. L'invention vise également l'utilisation desdites particules pour la préparation de matériaux actifs d'électrodes négatives, en particulier d'accumulateurs métal-ion, ainsi que lesdits matériaux actifs et électrodes *per se.*

## Description

La présente invention concerne la préparation de particules de carbone sphériques, denses, à partir d'un matériau éventuellement recyclé à structure imidazolate zéolithique comprenant du zinc et/ou du cobalt. L'invention vise également l'utilisation desdites particules pour la préparation de matériaux actifs d'électrodes négatives, en particulier d'accumulateurs métal-ion, ainsi que lesdits matériaux actifs et électrodes *per se.*

Les batteries lithium-ion sont largement utilisées dans une variété d'applications, allant des dispositifs électroniques portables aux véhicules électriques. L'une des composantes essentielles de ces batteries est l'électrode négative, ou anode, qui est généralement fabriquée en graphite. Le graphite est privilégié en raison de ses excellentes propriétés électrochimiques, notamment sa capacité à intercaler les ions lithium de manière efficace et réversible. Cette capacité d'intercalation permet au graphite de stocker et de libérer de l'énergie de manière fiable, ce qui est crucial pour la performance et la durabilité des batteries lithium-ion (Li-ion). De plus, le graphite offre une bonne conductivité électrique et une stabilité cyclique, ce qui contribue à la longévité des batteries.

Toutefois, le lithium est un métal coûteux, et son extraction peut avoir des impacts environnementaux négatifs, notamment en termes de consommation d'eau et de perturbation des écosystèmes.

Les batteries sodium-ion (Na-ion) ont été développées dans ce contexte. Comme mentionné ci-dessus, ces batteries sont moins chères à produire et leur production potentiellement plus respectueuse de l'environnement, contribuant à une empreinte écologique réduite. Elles peuvent également fonctionner à des températures plus élevées, ce qui les rend adaptées à des environnements extrêmes.

Cependant, les résultats des batteries Na-ion en termes de densité d'énergie sont encore trop faibles pour concurrencer les Lithium-ion. L'un des facteurs limitant est le carbone graphite également utilisé en tant qu'anode dans les batteries Li-ion. En effet, pour que la batterie puisse se charger ou se décharger, les ions doivent s'intercaler (être stockés) entre ces feuillets de façon réversible. De plus, le comportement des ions Na, lorsqu'ils s'intercalent dans le graphite, diffère de celui des ions Li, ce qui participe également à diminuer la densité d'énergie des batteries Na-ion.

À l'heure actuelle, la recherche sur les matériaux d'anode pour les batteries sodium ion se concentre principalement sur les matériaux à base de carbone, les alliages, les oxydes de métaux de transition et les composés organiques. Parmi de nombreux matériaux d'anode, les matériaux en carbone dur présentent les avantages d'un faible prix, d'une bonne conductivité électrique, d'une capacité de stockage de sodium élevée et du respect de l'environnement.

Le carbone dur fait référence au carbone non graphitisable, qui est typiquement du carbone pyrolytique de polymère de haut poids moléculaire.

En tant qu'électrode négative, le carbone dur a une meilleure stabilité structurelle, une durée de vie du cycle de batterie charge et de décharge plus longue et de meilleures performances de sécurité que les matériaux en graphite. Dans le même temps, les carbones durs peuvent améliorer les performances en puissance des batteries.

Cependant, les matériaux de type carbone dur restent désavantageux à cause de leur faible densité d'énergie. En outre, ces matériaux conduisent généralement à des dispositifs ayant une haute capacité irréversible, ce qui n'est pas désiré.

Un objectif de l'invention est ainsi de fournir des composés qui ne présentent pas les inconvénients précités.

En particulier, un objectif de l'invention est de fournir des matériaux d'électrode ayant une densité tapée élevée, plus élevée que les carbones durs et les graphites de référence, et ainsi des matériaux permettant une densité d'énergie également élevée.

Un autre objectif de l'invention est de fournir des matériaux d'électrodes négatives permettant une capacité irréversible basse, en particulier plus basse que celle des matériaux de l'art antérieur obtenus à partir de MOF.

Encore un autre objectif de l'invention est de mettre à disposition un procédé d'obtention de ces composés pouvant permettre l'utilisation en tant que réactif de départ d'un matériau recyclé, provenant notamment d'accumulateurs rechargeables et non-rechargeables.

Encore un autre objectif de l'invention est de mettre à disposition un procédé simple, robuste et versatile permettant d'obtenir des matériaux cibles polyvalents.

Ainsi, l'invention a pour objet un procédé de préparation de particules sphériques de carbone, comprenant une étape (i) de traitement thermique d'un matériau à structure imidazolate zéolithique comprenant du zinc et/ou du cobalt et se présentant sous la forme de particules sphériques.

Les Inventeurs ont en effet observé que, de manière surprenante, le procédé de l'invention permet de conserver la morphologie sphérique des particules, et donc d'obtenir très avantageusement des particules sphériques de carbone.

Par « sphérique », on entend notamment des particules sous forme de sphère parfaite ou sphéroïde, c'est-à-dire en particulier dont le rapport entre la dimension maximale (Dₘₐₓ) et la dimension minimale (Dₘᵢₙ) est inférieur à 1,4, par exemple inférieur à 1,2, voire inférieur à 1,1.

Selon un mode de réalisation particulier, le matériau à structure imidazolate zéolithique comprend du zinc, et en particulier, ne comprend pas de cobalt.

Selon un mode de réalisation particulier, le matériau à structure imidazolate zéolithique comprend du cobalt, et en particulier, ne comprend pas de zinc.

Selon un mode de réalisation particulier, le matériau à structure imidazolate zéolithique comprend du zinc et du cobalt.

Selon un mode de réalisation particulier, le matériau à structure imidazolate zéolithique comprend du zinc et du cobalt, dans un rapport atomique Zn:Co compris de 99:1 à 1:99, en particulier d'environ 90:10 ; 80:20 ; 70:30 ; 60:40 ; 50:50 ; 40:60 ; 30:70 ; 20:80 ; ou 10:90.

Selon un mode de réalisation particulier, l'étape (i) est réalisée à une température comprise de 907 à 3000°C, en particulier de 950 à 3000°C.

Selon un mode de réalisation particulier, l'étape (i) est réalisée à une température comprise de 950 à 2500°C, 950 à 2000°C, 950 à 1500°C, ou 950 à 1400°C.

Selon un mode de réalisation particulier, l'étape (i) est réalisée à une température comprise de 950 à 2500°C, 950 à 2000°C, 950 à 1500°C, ou 950 à 1400°C, le matériau à structure imidazolate zéolithique comprenant du zinc, et en particulier, ne comprenant pas de cobalt.

Selon un mode de réalisation particulier, l'étape (i) est réalisée à une température comprise de 1400 à 3000°C, en particulier de 1500 à 3000°C, plus particulièrement de 1500 à 2500°C.

Selon un mode de réalisation particulier, l'étape (i) est réalisée à une température comprise de 1400 à 3000°C, en particulier de 1500 à 3000°C, plus particulièrement de 1500 à 2500°C, le matériau à structure imidazolate zéolithique comprenant du cobalt, et en particulier, ne comprenant pas de zinc.

Selon un mode de réalisation particulier, l'étape (i) est réalisée à une pression comprise de 0.5 bar à 2 bars, par exemple sous pression atmosphérique.

Selon un mode de réalisation particulier, l'étape (i) est réalisée pendant une durée comprise de 30 minutes à 6 heures, par exemple pendant 2 heures environ.

Selon un mode de réalisation particulier, les particules sphériques du matériau à structure imidazolate zéolithique présentent, préalablement au procédé de l'invention, une taille moyenne en volume comprise, entre 1 µm et 40 µm et, en particulier, entre 2 et 20 µm, plus particulièrement entre 5 µm et 10 µm.

Selon un mode de réalisation particulier, les particules sphériques de carbone présentent, à l'issue du procédé de synthèse, une taille moyenne en volume comprise, entre 1 µm et 38 µm et, en particulier, entre 2 et 18 µm, plus particulièrement entre 5 µm et 8 µm.

À cet égard, on précise que l'on entend notamment par « taille », le diamètre des particules dans le cas où ce sont des sphères parfaites, ou le diamètre de cercles qui présenteraient la même surface que les particules (ou diamètre équivalent) dans le cas où ce sont des quasi-sphères.

Comme connu en soi, la taille des particules peut être déterminée par granulométrie par diffraction de la lumière, par exemple au moyen d'un granulomètre laser tel que celui commercialisé sous la référence MastersizerTM 3 000 par Malvern Panalytical, ou bien par morphogranulométrie, par exemple au moyen du morphogranulomètre commercialisé sous la référence MorphologiTM G3, également par Malvern Panalytical, ou bien encore à l'aide d'un microscope électronique à balayage (dit MEB) et d'un logiciel de traitement d'image.

Il a été observé que, grâce au procédé de synthèse de l'invention, les particules de carbone issues d'une même synthèse, c'est-à-dire les particules de carbone d'un même lot, sont avantageusement monodisperses.

Selon un mode de réalisation particulier, les particules sphériques de carbone, à l'issue du procédé, comprennent ou sont constituées de carbone dur ou de carbone amorphe, et/ou de carbone cristallin, notamment de type graphite ou graphène, en particulier de graphite.

Selon un mode de réalisation particulier, les particules sphériques de carbone, à l'issue du procédé, comprennent ou sont constituées de carbone dur ou de carbone amorphe.

Par « carbone dur », on entend en particulier un type de matériau carboné, non graphitisable même s'il est porté à des températures dépassant les 2 500 °C. Les termes de carbone « désordonné » et « non organisé » sont largement utilisés comme synonymes.

Selon un mode de réalisation particulier, les particules sphériques de carbone, à l'issue du procédé, comprennent ou sont constituées de carbone cristallin, notamment de type graphite ou graphène, par exemple de graphite.

Selon un mode de réalisation particulier, les particules sphériques de carbone, à l'issue du procédé, comprennent ou sont constituées de carbone cristallin, notamment de type graphite ou graphène, par exemple de graphite, le matériau à structure imidazolate zéolithique comprenant du cobalt, et éventuellement du zinc.

Selon un mode de réalisation particulier, les particules sphériques de carbone, à l'issue du procédé, comprennent ou sont constituées de carbone dur ou de carbone amorphe, et de carbone cristallin, notamment de type graphite ou graphène, en particulier de graphite.

Selon un mode de réalisation particulier, les particules sphériques de carbone, à l'issue du procédé, comprennent ou sont constituées de carbone dur ou de carbone amorphe, et de carbone cristallin, notamment de type graphite ou graphène, en particulier de graphite, le matériau à structure imidazolate zéolithique comprenant du cobalt, et éventuellement du zinc.

Selon un mode de réalisation particulier, les particules sphériques de carbone, à l'issue du procédé, comprennent ou sont constituées de microdomaines de carbone dur ou de carbone amorphe, et de microdomaines de carbone de type graphite ou graphène.

Selon un mode de réalisation particulier, les particules sphériques de carbone, à l'issue du procédé, comprennent ou sont constituées de carbone dur ou de carbone amorphe, l'étape (i) étant réalisée à une température comprise de 950 à 2500°C.

Selon un mode de réalisation particulier, les particules sphériques de carbone, à l'issue du procédé, comprennent ou sont constituées de carbone de type graphite ou graphène, l'étape (i) étant réalisée à une température comprise de 2500 à 3000°C.

Selon un mode de réalisation particulier, les particules sphériques de carbone, à l'issue du procédé, comprennent ou sont constituées de microdomaines de carbone dur ou de carbone amorphe, et de microdomaines de carbone de type graphite ou graphène, l'étape (i) étant réalisée avec un dopage de cobalt, en particulier de 10 % à 90 %, et une température comprise de 950 à 2500°C.

Selon un mode de réalisation particulier, l'étape (i) est réalisée sous atmosphère inerte, en particulier sous argon et/ou diazote, avec optionnellement du dihydrogène, par exemple à hauteur de 2% environ en volume par rapport au volume d'atmosphère inerte.

Selon un mode de réalisation particulier, le matériau à structure imidazolate zéolithique comprenant du zinc et/ou du cobalt et se présentant sous la forme de particules sphériques est obtenu selon au moins les étapes suivantes :
a) réaction en milieu aqueux, à une température θ et sans ou sous agitation, en particulier sans agitation, entre un sel de zinc et/ou de cobalt et au moins un ligand choisi parmi l'imidazole et ses dérivés, moyennant quoi un précipité est obtenu ; et
b) récupération du précipité ;
et est caractérisé en ce que, à l'étape a), le(s) ligand(s) est (sont) présent(s) dans le milieu aqueux à une concentration au moins égale à sa (leur) limite de solubilité dans l'eau à la température θ.

La limite de solubilité du (des) ligand(s) s'entend en particulier comme la concentration maximale (massique ou molaire) à laquelle ce(s) ligand(s) peu(ven)t être dissous dans le milieu aqueux et, plus généralement, dans de l'eau à la température de la réaction entre le sel de zinc ou de cobalt et ce ligand, c'est-à-dire à la température θ. Typiquement, un ligand de type imidazole présente une limite de solubilité dans l'eau au moins égale à 2 g/L à 30 °C.

Le ou les ligands répondent préférentiellement à la formule (I) ci-après : 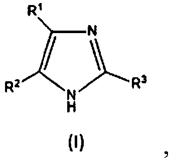 dans laquelle :
- R¹ et R² représentent, indépendamment l'un de l'autre, un atome d'hydrogène, un groupe alkyle linéaire ou ramifié en C₁ à C₄, un atome d'halogène, un groupe amino ou un groupe nitro, ou bien R¹ et R² forment ensemble un groupe phényle éventuellement substitué une ou plusieurs fois ; et
- R³ représente un atome d'hydrogène, un groupe alkyle linéaire ou ramifié en C₁ à C₄, un atome d'halogène, un groupe amino ou un groupe nitro.

On précise que l'on entend :
- *par « groupe alkyle linéaire ou ramifié en C₁ à C₄* », tout groupe alkyle (i.e. de formule CₙH₂ₙ₊₁) comprenant 1, 2, 3 ou 4 atomes de carbone et dont la chaîne, dans le cas où il est en C₄, peut être linéaire ou comprendre une ramification ; et
- par *« un groupe phényle éventuellement substitué une ou plusieurs fois* », un groupe phényle dont l'atome d'hydrogène porté par un ou plusieurs atomes de carbone du cycle est remplacé par un substituant tel qu'un atome d'halogène, un groupe alkyle linéaire ou ramifié en C₁ à C₄, un groupe amino ou un groupe nitro.

Plus particulièrement, lorsque R¹, R² et/ou R³ représentent un groupe alkyle linéaire ou ramifié en C₁ à C₄, ils peuvent être choisis, indépendamment les uns des autres, parmi un groupe méthyle et un groupe éthyle.

Aussi, dans la formule (I) ci-avant, on préfère que :
- R¹ et R² représentent, indépendamment l'un de l'autre, un atome d'hydrogène, un groupe méthyle, un groupe éthyle, un atome d'halogène, un groupe amino ou un groupe nitro, ou bien R¹ et R² forment ensemble un groupe phényle ; et
- R³ représente un atome d'hydrogène, un groupe méthyle, un groupe éthyle, un atome d'halogène, un groupe amino ou un groupe nitro.

Plus particulièrement, on préfère que :
- R¹ et R² représentent un atome d'hydrogène ou bien que R¹ et R² forment ensemble un groupe phényle ; et
- R³ représente un atome d'hydrogène, un groupe méthyle ou un groupe éthyle.

Plus encore, on préfère que le ou les ligands présentent une partie hydrophobe, ce qui est notamment le cas des ligands répondant à la formule (I) ci-dessus dans laquelle R¹ et R² forment ensemble un groupe phényle.

Parmi ceux-ci, toute préférence est donnée au benzimidazole qui répond à la formule suivante :

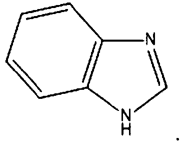

De préférence, le sel de zinc ou de cobalt est choisi parmi les nitrates et les sulfates de zinc ou de cobalt, avantageusement sous forme hydratée.

La température *θ* à laquelle la réaction de l'étape a) est réalisée, est de préférence comprise entre 20°C et 80°C, par exemple de 40°C.

L'agitation est, quand elle est réalisée, de préférence maintenue pendant plusieurs heures, par exemple, entre 6 heures et 12 heures.

Avantageusement, à l'étape a), le ratio molaire zinc/ligand(s) ou cobalt/ligand(s) du milieu aqueux est compris entre 1/16 et 1/25.

Selon un mode de réalisation particulier, le matériau à structure imidazolate zéolithique comprenant du zinc et/ou du cobalt et se présentant sous la forme de particules sphériques est recyclé, en particulier provenant notamment d'accumulateurs rechargeables et non-rechargeables, plus particulièrement issu du recyclage de déchets de piles alcalines et/ou des accumulateurs Li-ion avec une cathode de type NMC.

Selon un autre aspect, la présente invention concerne également des particules sphériques de carbone susceptibles d'être obtenues par le procédé tel que défini précédemment.

Selon un autre aspect, la présente invention concerne également une poudre constituée de ou comprenant une pluralité de particules sphériques de carbone telles que définies précédemment.

En particulier, ladite poudre a une densité tapée comprise de 1,0 à 5,0 g/cm³, en particulier entre 1,2 et 3,0 g/cm³.

Selon un autre aspect, la présente invention concerne également une poudre constituée de ou comprenant une pluralité de particules sphériques de carbone ayant une densité tapée comprise de 1,0 à 5,0 g/cm³, en particulier entre 1,2 et 3,0 g/cm³.

Selon un autre aspect, la présente invention concerne également un procédé tel que défini précédemment, comprenant, après l'étape (i) :
(ii) une étape d'imprégnation des particules sphériques de carbone par une solution d'une source organique de carbone dans un solvant ;
(iii) une étape de traitement thermique des particules sphériques de carbone imprégnées obtenues à l'issue de l'étape (ii).

L'étape (ii), suivant de l'étape (i), est susceptible de permettre, si souhaité, de remplir les pores des particules de carbone pour former des particules de carbone composites ayant une surface spécifique diminuée.

Selon un mode de réalisation particulier, l'étape (ii) est répétée au moins une fois, préalablement à l'étape (iii).

Selon un mode de réalisation particulier, l'étape (ii) et l'étape (iii) sont répétées, au moins une fois.

Selon un mode de réalisation particulier, la source organique de carbone est choisie parmi les sucroses, les celluloses, les carboxyméthylcelluloses, et les glycérols.

Selon un mode de réalisation particulier, l'étape (ii) est une imprégnation hydrothermale ou une imprégnation sous vide.

Selon un mode de réalisation particulier, l'imprégnation est une imprégnation sous vide.

Selon un mode de réalisation particulier, l'imprégnation est une imprégnation hydrothermale.

Selon un mode de réalisation particulier, l'imprégnation hydrothermale est réalisée à une température comprise de 100 à 200°C, par exemple à environ 120°C, et/ou pendant une durée de 12 à 120 heures, par exemple environ 38 heures.

Selon un mode de réalisation particulier, l'imprégnation hydrothermale est suivie, préalablement à l'étape (iii), d'une étape de récupération des particules ainsi traitées, par exemple à l'aide d'une centrifugeuse.

Le solvant peut être choisi comme bien connu de l'homme du métier selon la source organique de carbone.

Selon un mode de réalisation particulier, le solvant est de l'eau, la source organique de carbone étant notamment un sucrose.

Selon un mode de réalisation particulier, la concentration de la source organique de carbone dans le solvant est comprise de 0,1M à la saturation, notamment à environ 25°C, notamment d'environ 0,36 M.

Selon un mode de réalisation particulier, les particules sphériques composites de carbone ont, à l'issue de l'étapes (iii), une surface spécifique comprise de 10 à 80 m²/g, en particulier de 16 à 20 voire 25 m²/g.

La surface spécifique peut être mesurée par toute technique bien connue de l'homme du métier.

La surface spécifique a notamment été mesurée à 77 K par la méthode BET avec un MICROMERITICS ASAP 2020 (analyseur de surface et de porosité). Pour ce faire, et à titre d'exemple, environ 100 mg d'échantillon ont été utilisés et dégazés à 150 °C sous vide. Pour les calculs de surface, a été utilisée l'adsorption d'azote gazeux, et le modèle BET a été appliqué dans la gamme p/p0 de 0,01-0,2.

Selon un mode de réalisation particulier, l'étape (ii) est précédée d'une étape (i') d'activation, en particulier à l'aide d'un solvant de type méthanol, des particules sphériques de carbone issues de l'étape (i).

Selon un autre mode de réalisation particulier, l'étape (ii) est précédée d'une étape (i') de séchage des particules sphériques de carbone issues de l'étape (i).

Ce séchage peut être effectué par toute technique bien connue de l'homme du métier, par exemple par chauffage, par exemple à une température d'environ 120°C.

Selon un autre aspect, l'invention concerne également les particules sphériques composites de carbone susceptibles d'être obtenues par le procédé tel que défini précédemment.

Selon un autre aspect, l'invention concerne également des particules sphériques composites de carbone ayant une surface spécifique comprise de 10 à 80 m²/g, en particulier de 16 à 20 voire 25 m²/g.

Par « particules sphériques composites », on entend notamment des particules sphériques de carbone portant au moins sur une partie de leur surface du carbone dur, en particulier sous forme de couche.

Selon un mode de réalisation particulier, l'invention concerne également des particules sphériques de carbone portant au moins sur une partie de leur surface du carbone dur, en particulier sous forme de couche, ayant une surface spécifique comprise de 10 à 80 m²/g, en particulier de 16 à 20 voire 25 m²/g.

Selon un autre aspect, l'invention concerne également une poudre constituée de ou comprenant une pluralité de particules sphériques de carbone composites telles que définies précédemment.

Selon un autre aspect, l'invention concerne également l'utilisation de particules sphériques composites de carbone telles que définies précédemment ou d'une poudre telle que définie précédemment pour la préparation d'une électrode, en particulier négative, notamment pour une pile ou un accumulateur métal-ion.

Selon un autre aspect, l'invention concerne également une électrode, en particulier négative, notamment pour une pile ou un accumulateur métal-ion, le métal étant en particulier choisi parmi Li, Na et K, comprenant des particules de carbone composites ou une poudre constituée de ou comprenant des particules de carbone composites telles que définies précédemment.

Selon un autre aspect, l'invention concerne également une pile ou un accumulateur comprenant une électrode, en particulier négative, comprenant des particules de carbone composites ou une poudre constituée de ou comprenant des particules de carbone composites telles que définies précédemment, ayant notamment une capacité irréversible inférieure à 60 mAh/g.

Selon un mode de réalisation particulier, la pile ou l'accumulateur tel que défini précédemment comprend en outre au moins un électrolyte, un séparateur, en particulier microporeux, et une électrode positive.

Ces éléments sont bien connus de l'homme du métier, qui pourra les sélectionner, notamment parmi les éléments du commerce, selon les besoins.

Les piles et les accumulateurs de l'invention peuvent par exemple être utilisées dans le domaine du stockage électrique, notamment stationnaire, ou en mobilité électrique, notamment pour de l'électronique portable ou mettable, en intégration dans des fibres et/ou des câbles, en particulier dans le cadre de batteries filaires, ou pour un usage médical.

En particulier, les piles et les accumulateurs de l'invention peuvent être utilisées dans le domaine de la mobilité électrique, notamment pour véhicules électriques, véhicules électriques hybrides rechargeables, véhicules hybrides, ou 2 roues électriques.

En particulier, les piles et les accumulateurs de l'invention peuvent être utilisées dans le domaine de l'électroportatif, notamment téléphonie, ordinateurs portables, ou outillage portatif.

Selon un autre aspect, l'invention concerne également une batterie comprenant une pile ou un accumulateur tel(le) que défini(e) précédemment.

Selon un autre aspect, l'invention concerne également un système électroportatif ou adapté à la mobilité électrique, comprenant une batterie telle que définie précédemment.

### DEFINITIONS

Tel qu'on l'entend ici, les plages de valeur sous forme de « x-y » ou « de x à y » ou « entre x et y » incluent les bornes x et y, les entiers compris entre ces bornes, ainsi que tous les autres nombres réels compris entre ces bornes. A titre d'exemple, « 1-5 », ou « de 1 à 5 » ou « entre 1 et 5 » désignent les entiers 1, 2, 3, 4 et 5, ainsi que tous les autres nombres réels compris entre 1 et 5. Les modes de réalisations préférés incluent chaque entier pris individuellement dans la plage de valeur, ainsi que toute sous-combinaison de ces entiers et tout ensemble de nombres réels compris entre ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

### FIGURES

La **figure 1** présente un cliché du composé ZIF-7-III_C950, selon l'exemple 1, par microscopie électronique à balayage (MEB).
La **figure 2** représente un diffractogramme DRX (Diffraction des Rayons X ) expérimental du composé ZIF-7-III_C950, selon l'exemple 1.
La **figure 3** illustre les performances électrochimiques du composé ZIF-7-III_C950 selon l'exemple 1 comparées à celles de Carbotron (référence hors invention).
La **figure 4** présente un cliché du composé ZIF-7-III_C950_Imp_C1400, selon l'exemple 2, par microscopie électronique à balayage (MEB).
La **figure 5** représente un diffractogramme DRX (Diffraction des Rayons X ) expérimental du composé ZIF-7-III_C950_Imp_C1400, selon l'exemple 2.
La **figure 6** illustre les performances électrochimiques pendant les trois premiers cycles du composé ZIF-7-III_C950_Imp_C1400 selon l'exemple 2 comparées à celles de Carbotron (référence hors invention).
La **figure 7** présente un cliché du composé ZIF-7-III_C1400, selon l'exemple 3, par microscopie électronique à balayage (MEB).
La **figure 8** représente un diffractogramme DRX (Diffraction des Rayons X ) expérimental du composé ZIF-7-III_C1400, selon l'exemple 3.
La **figure 9** illustre les performances électrochimiques du composé ZIF-7-III_C1400 selon l'exemple 3 comparées à celles de Carbotron (référence hors invention).

### EXEMPLES

### Exemple 1 : Procédé selon l'invention comprenant un traitement thermique à 950°C

Une pyrolyse de particules de type ZIF-7-III sphériques à 950 °C a été réalisée, pour obtenir une matrice carbonée de type « carbone dur ».

Pour ce faire, une quantité de ZIF-7-III sphérique a été obtenu comme suit : 0,506 g de nitrate de zinc hexahydraté sont tout dabord dissous dans 15 mL d'eau distillée, puis 3,544 g de benzimidazole (soit un ratio molaire zinc/benzimidazole de 1/17) sont ajoutés. Le mélange obtenu est introduit dans un récipient de réaction en téflonTM puis est chauffé à 40°C, sous agitation, pendant 12 heures. Il se forme ainsi un précipité qui est récupéré par filtration sous vide, conduisant à l'obtention d'une poudre étant constituée de particules de type ZIF-7-III sphériques.

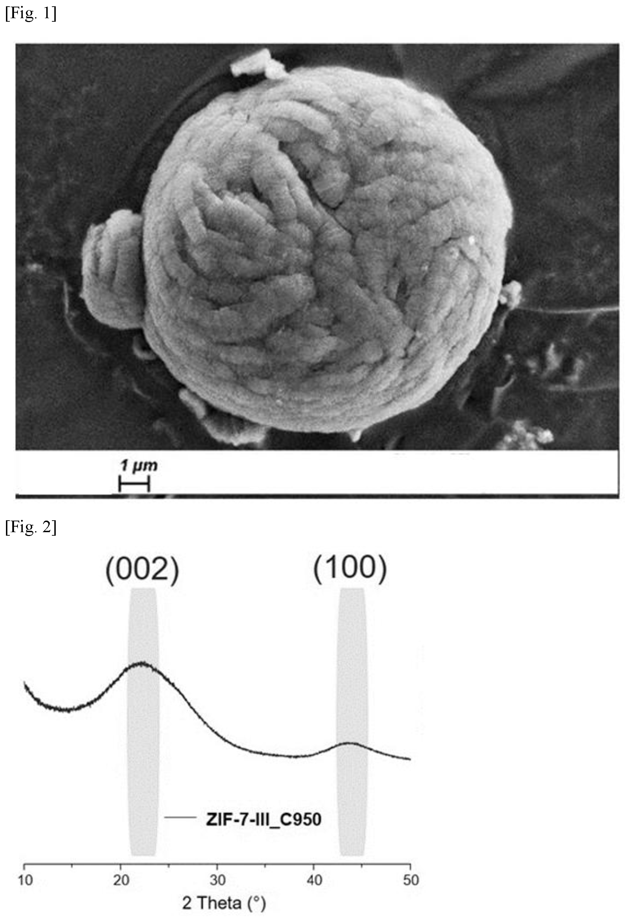

Le matériau ainsi obtenu a subi une procédure de pyrolyse à 950 °C sous atmosphère Ar ou Ar/H₂ pendant deux heures, afin de sublimer le zinc qui va se vaporiser et en suite se condenser plus loin dans la tube en tant que zinc métallique. Dans le creuset, une matrice carbonée est récupérée qui conserve la forme sphérique des particules mères comme observé par microscopie électronique à balayage avec des particules de taille comprise entre 5-8 µm **(****Fig. 1****)** et possède un diffractogramme qui est analogue à celui d'un carbone dur **(****Fig. 2****).**

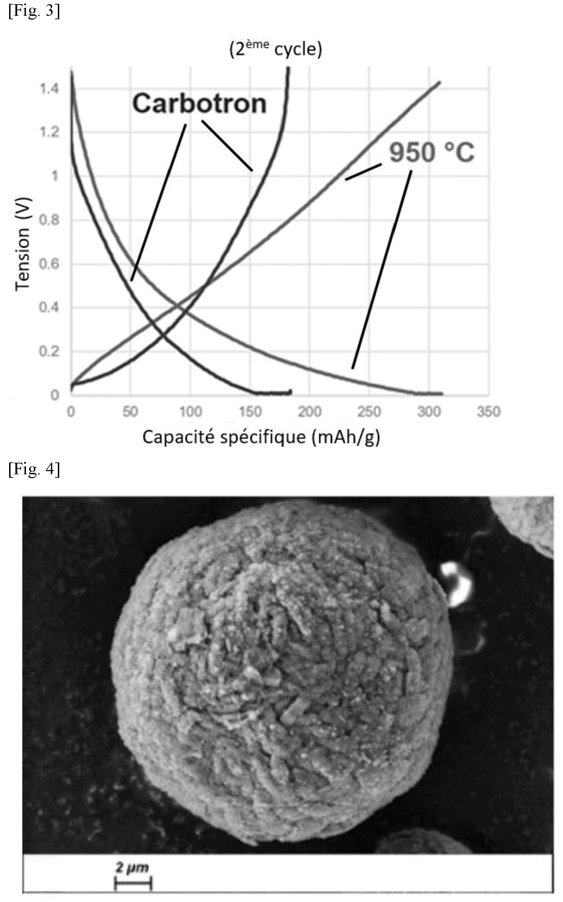

Les caractérisations électrochimiques sont réalisées à l'aide de piles boutons de type CR2032 qui se composent d'une anode (feuille de lithium) et d'une cathode séparées par un film de polypropylène poreux Celgard^{®} 2400 et un séparateur Viledon^{®}. Les anodes sont fabriquées en recouvrant une suspension de 96 % en poids de matériaux actifs, de 2 % en poids de CMC (Carboxy Methyl Cellulose, 2 % en poids dans l'eau) et de 2 % en poids de SBR (Styrene Butadiene Rubber, 40 % en poids dans l'eau) sur une feuille de cuivre. L'électrolyte est 1 mol/L LiPF₆ dans EC/PC/DMC (carbonate d'éthylène:carbonate de propylène:carbonate de diméthyle) dans un rapport de volume de 1/1/3. Les cellules à pièces sont assemblées dans une boîte à gants remplie d'argon et sont cyclées sur un testeur Arbin^{®} en mode galvanostatique. Les tests de charge et de décharge sont effectués à un courant de décharge de 200 mA/g (C/20) dans une plage de tension de 0,1 V - 3,0 V à 25 °C. Tous les potentiels dans cette étude sont donnés par rapport à Li⁺/Li. Les performances électrochimiques de ZIF-7-III_C950 montrent **(****Fig. 3****)** une matrice carbonée avec une signature relativement éloignée de celle de la référence Carbotron (carbone dur produit à partir de brai de pétrole), mais avec une meilleure valeur de capacité spécifique (>150 mAh/g). La densité tapée est à 1,27 g/cm³, est également plus élevée que le Carbotron avec 0,8 g/cm3. Une quantité de chaque matériau (> 3 g) est ajoutée dans une éprouvette graduée laquelle est ensuite placée dans un « densitap ». Cet appareil permet de mesurer le tassage des matériaux granulaires en tapant mécaniquement l'éprouvette. Le ratio masse/volume après tassage donne la valeur de la densité tapée.

### Exemple 2 : Procédé selon l'invention comprenant en sus un traitement de surface

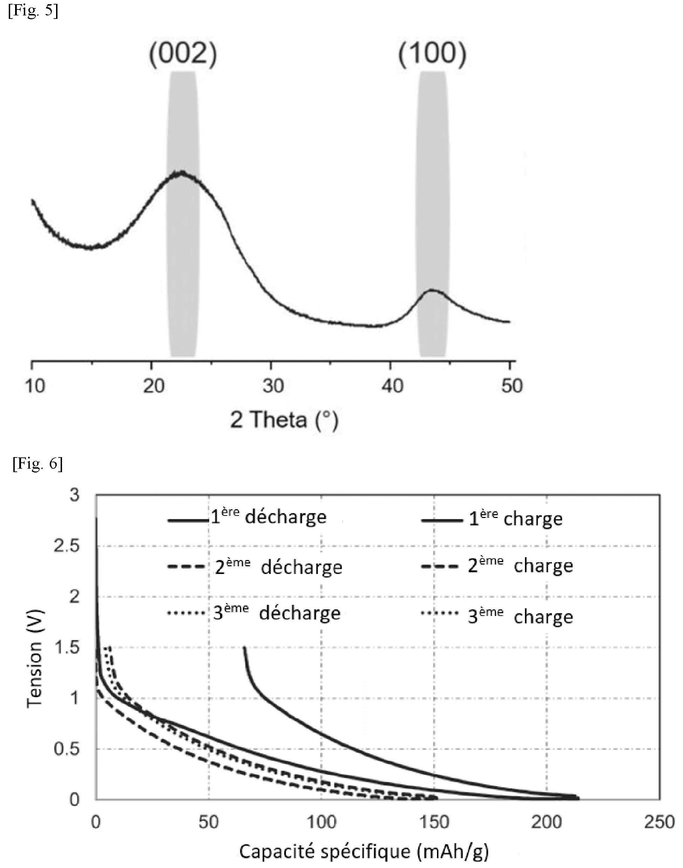

Un traitement de surface a été effectué dans cet exemple. Dans un premier temps, le composé ZIF-7-III_C950 tel qu'obtenu à l'exemple 1 est préalablement activé de la manière suivante : le composé carboné résultant est préalablement plongé dans du méthanol à 50°C puis est filtré et séché à une température de 70°C afin de libérer la porosité en supprimant l'eau (séchage à 120°C si l'étape d'activation se fait pas). Ensuite le composé activé est transféré dans un réacteur en téflon pour une imprégnation hydrothermale dans une solution de sucrose de 0.36M qui est placé en suite à une étuve à 120 °C pendant 38h. Après récupération par centrifugeuse, le composé a subi un traitement thermique à 1400 °C sous atmosphère Ar ou Ar/H₂ pendant deux heures, pour obtenir le composé ZIF-7-III_C950_Imp_C1400. La surface spécifique de ce dernier composé est diminuée de 335 m²/g à 16 m²/g. La capacité irréversible lors du premier cycle galvanostatique est diminuée de 66-77 % à 30 % **(****Fig. 6****).**

### Exemple 3 : Procédé selon l'invention comprenant un traitement thermique à 1400°C

Une pyrolyse de particules de type ZIF-7-III sphériques à 1400 °C a été réalisée, pour obtenir une matrice carbonée de type « carbone dur ».

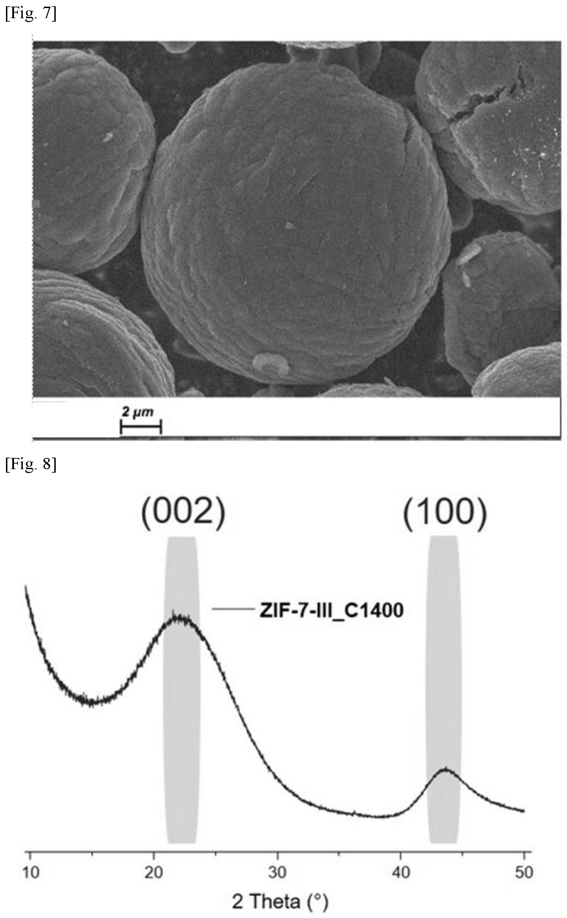

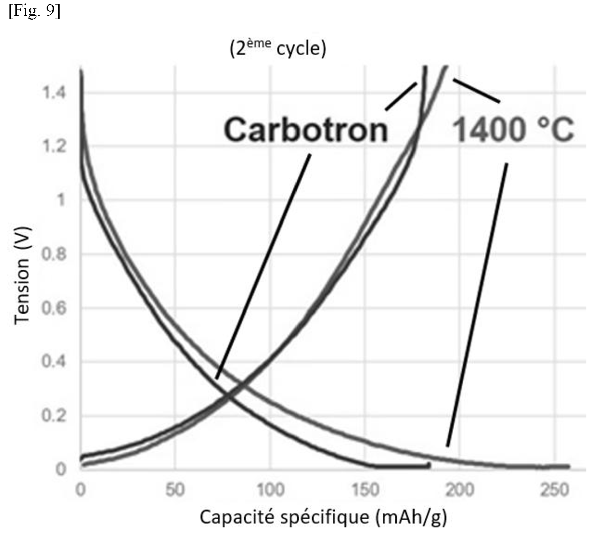

Une quantité de ZIF-7-III sphérique (synthétisée comme indiqué au paragraphe 1) a subi une procédure de pyrolyse à 1400 °C sous atmosphère Ar ou Ar/H₂ pendant deux heures, afin de sublimer le zinc qui va se vaporiser et en suite se condenser plus loin dans la tube en tant que zinc métallique. Dans le creuset en alumine, une matrice carbonée est récupérée qui conserve la forme sphérique des particules mères comme observé par microscopie électronique à balayage avec des particules de taille entre 5-8 µm **(****Fig. 7****).** Le même diffractogramme qu'un carbone dur est retrouvé **(****Fig. 8****)** et les performances électrochimiques sont identiques que celles pour le Carbotron **(****Fig. 9****).** En plus, la densité tapée de l'échantillon selon l'invention est de 2,5 g/cm3, soit trois fois plus haute que celle de Carbotron.

## Revendications

1. Procédé de préparation de particules sphériques de carbone, comprenant une étape (i) de traitement thermique d'un matériau à structure imidazolate zéolithique comprenant du zinc et/ou du cobalt et se présentant sous la forme de particules sphériques.

2. Procédé selon la revendication 1, dans lequel l'étape (i) est réalisée à une température comprise de 907 à 3000°C, en particulier de 950 à 3000°C, et/ou pendant une durée comprise de 30 minutes à 6 heures, par exemple pendant 2 heures environ.

3. Procédé selon l'une quelconque des revendications précédentes, les particules sphériques du matériau à structure imidazolate zéolithique présentent :
- préalablement au procédé de l'invention, une taille moyenne en volume comprise, entre 1 µm et 40 µm et, en particulier, entre 2 et 20 µm, plus particulièrement entre 5 µm et 10 µm ; et/ou
- à l'issue du procédé de synthèse, une taille moyenne en volume comprise, entre 1 µm et 38 µm et, en particulier, entre 2 et 18 µm, plus particulièrement entre 5 µm et 8 µm.

4. Procédé selon l'une quelconque des revendications précédentes, dans lequel les particules sphériques de carbone, à l'issue du procédé, comprennent ou sont constituées :
- de carbone dur ou de carbone amorphe, et/ou de carbone cristallin, en particulier de graphite ;
- de carbone dur ou de carbone amorphe ;
- de carbone de type graphite ou graphène ; ou
- de microdomaines de carbone dur ou de carbone amorphe, et de microdomaines de carbone de type graphite ou graphène.

5. Procédé selon l'une quelconque des revendications précédentes, dans lequel l'étape (i) est réalisée sous atmosphère inerte, en particulier sous argon et/ou diazote, avec optionnellement du dihydrogène, par exemple à hauteur de 2% environ en volume par rapport au volume d'atmosphère inerte.

6. Procédé selon l'une quelconque des revendications précédentes, dans lequel le matériau à structure imidazolate zéolithique comprenant du zinc et/ou du cobalt et se présentant sous la forme de particules sphériques est :
- obtenu selon au moins les étapes suivantes :
a) réaction en milieu aqueux, à une température θ, entre un sel de zinc et/ou de cobalt et au moins un ligand choisi parmi l'imidazole et ses dérivés, moyennant quoi un précipité est obtenu ; et
b) récupération du précipité ;
et est **caractérisé en ce que**, à l'étape a), le(s) ligand(s) est (sont) présent(s) dans le milieu aqueux à une concentration au moins égale à sa (leur) limite de solubilité dans l'eau à la température θ ; ou
- recyclé, en particulier provenant notamment d'accumulateurs rechargeables et non-rechargeables, plus particulièrement issu du recyclage de déchets de piles alcalines et/ou des accumulateurs Li-ion avec une cathode de type NMC.

7. Poudre constituée de ou comprenant une pluralité de particules sphériques de carbone ayant une densité tapée comprise de 1,0 à 5,0 g/cm³, en particulier entre 1,2 et 3,0 g/cm³.

8. Procédé selon l'une quelconque des revendications 1 à 6, comprenant, après l'étape (i) :
(ii) une étape d'imprégnation des particules sphériques de carbone par une solution d'une source organique de carbone dans un solvant ;
(iii) une étape de traitement thermique des particules sphériques de carbone imprégnées obtenues à l'issue de l'étape (ii).

9. Procédé selon la revendication 8, dans lequel la source organique de carbone est choisie parmi les sucroses, les celluloses, les carboxyméthylcelluloses, et les glycérols.

10. Procédé selon l'une quelconque des revendications 8 à 9, dans lequel l'étape (ii) est une imprégnation hydrothermale ou une imprégnation sous vide.

11. Procédé selon l'une quelconque des revendications 8 à 10, dans lequel les particules sphériques composites de carbone ont, à l'issue de l'étapes (iii), une surface spécifique comprise de 10 à 80 m²/g, en particulier de 16 à 20 voire 25 m²/g.

12. Particules sphériques de carbone portant au moins sur une partie de leur surface du carbone dur, en particulier sous forme de couche, ayant une surface spécifique comprise de 10 à 80 m²/g, en particulier de 16 à 20 voire 25 m²/g.

13. Poudre constituée de ou comprenant une pluralité de particules sphériques de carbone composites selon la revendication 12.

14. Utilisation de particules sphériques composites de carbone selon la revendication 12 ou d'une poudre selon la revendication 13 pour la préparation d'une électrode, en particulier négative, notamment pour une pile ou un accumulateur métal-ion.
